# EUROPÄISCHE PATENTSCHRIFT

(11) **EP 0 307 830 B1**
(45) Veröffentlichungstag und Bekanntmachung des Hinweises auf die Patenterteilung: **09.06.1993**
(21) Anmeldenummer: 88114837.3
(22) Anmeldetag: 10.09.1988
(51) Int. Cl.: B23Q 5/40

(54) **Antriebsvorrichtung für eine Bewegungseinheit einer Werkzeugmaschine**
Driving device for a machine tool slide
Dispositif d'entraînement pour un chariot d'un machine outil

(30) Priorität: 16.09.1987 DE 3731005
(43) Veröffentlichungstag der Anmeldung: 22.03.1989
(73) Patentinhaber: CHIRON-WERKE GMBH & CO. KG, 78532 Tuttlingen (DE)
(72) Erfinder: Winkler, Hans-Henning, Dr., D-7200 Tuttlingen (DE); Rütschle, Eugen, D-7202 Mühlheim (DE); Haninger, Rudolf, D-7201 Seitingen (DE)
(74) Vertreter: Witte, Alexander, Dr.-Ing.

(56) Entgegenhaltungen:
- DE-A- 1 602 902
- DE-A- 2 206 930
- DE-A- 2 331 347
- FR-A- 2 535 426
- GB-A- 2 116 460
- US-A- 2 354 414
- US-A- 3 859 001

## Beschreibung

Die Erfindung betrifft eine Werkzeugmaschine mit einer entlang einer horizontal verlaufenden Achse relativ zu einem Werkstücktisch verfahrbaren Bewegungseinheit, mit in Richtung der Achse verlaufenden und in dieser Richtung unbeweglichen Führungsschienen, auf denen axial versetzte Führungselemente der Bewegungseinheit laufen, und mit einem Antriebsmotor zum Erzeugen einer Relativbewegung zwischen Bewegungseinheit und Führungsschienen, wobei die Motorwelle parallel zu den Führungsschienen verläuft.

Eine derartige Werkzeugmaschine ist aus einem Prospekt "CNC Fertigungszentrum FZ 16" bekannt.

Die bekannte Werkzeugmaschine weist einen in einer Horizontalebene angeordneten raumfesten Werkstücktisch auf, der in einer horizontalen Richtung mehrere Meter lang sein kann.

Der Benutzer der Werkzeugmaschine steht vor einer Längsseite des Werkstücktischs. Hinter der gegenüberliegenden Längsseite des Werkzeugtischs ist ein etwa mannshoher Schaltschrank angeordnet, der alle zur Stromversorgung und Steuerung der Werkzeugmaschine erforderlichen elektrischen und elektronischen Komponenten enthält. Das Maschinenbett der Werkzeugmaschine erstreckt sich auch auf den Bereich zwischen Werkstücktisch und Schaltschrank. In diesem Zwischenraum ist am Maschinentisch eine parallel zur Längserstreckung des Werkstücktischs verlaufende Führung in der sogenannten x-Achse angeordnet. In der x-Achse läuft ein x-Schlitten, der an seiner Oberseite wiederum mit zwei senkrecht zur x-Achse, nämlich in der sogenannten y-Achse verlaufenden Führungsschienen versehen ist. In den y-Führungsschienen ist ein y-Schlitten geführt. Um die Bewegung des y-Schlittens relativ zum x-Schlitten zu bewerkstelligen, ist zwischen dem y-Schlitten und dem Schaltschrank am x-Schlitten ein Antriebsmotor angeordnet, der eine in der y-Achse verlaufende Kugelgewindespindel in Drehung versetzt. Die Kugelgewindespindel arbeitet mit einer im y-Schlitten fest angeordneten Gewindehülse zusammen, so daß bei laufendem Antriebsmotor der y-Schlitten entlang der y-Achse verfahren wird.

An der dem Werkstücktisch zugewandten Vorderseite des y-Schlittens sind wiederum zwei vertikal und parallel zueinander verlaufende Führungsschienen angeordnet, um einen Spindelstock in der Vertikalachse, der sogenannten z-Achse verfahren zu können. Hierzu ist zwischen den vertikalen Führungsschienen eine raumfeste Gewindespindel angeordnet, die mit einer im Spindelstock drehbar angeordneten Gewindehülse zusammenarbeitet.

Auf diese Weise ist es möglich, den Spindelstock in Richtung von drei kartesischen Koordinaten zu verfahren.

Die bekannte Werkzeugmaschine hat jedoch den Nachteil, daß sie in Richtung der y-Achse eine relativ große Bautiefe aufweist, was insbesondere bei beengten Werkstattverhältnissen zu Aufstellungsproblemen führt. Außerdem sind Wartungs- und Reparaturarbeiten am y-Antrieb schwierig, weil der y-Antriebsmotor zwischen dem y-Schlitten und dem Schaltschrank angeordnet und dort nur schwer zugänglich ist. Insbesondere sind die Antriebselemente in Richtung der y-Achse nur unter Schwierigkeiten demontierbar, weil eine Bewegung in Richtung der y-Achse zu beiden Seiten durch den Schaltschrank bzw. den y-Schlitten begrenzt wird.

Aus der US-A-2 354 414 ist eine Horizontal-Bohr- und Fräsmaschine mit einem in X- und Y-Richtung verfahrbaren Ständer bekannt. Der Antriebsmotor für den Y-Schlitten ist auch hier in Y-Richtung hinter dem Y-Schlitten angeordnet, allerdings mit in X-Richtung verlaufender Motorwelle. Ferner ist der Motor mit seinem Stator starr mit dem Y-Schlitten verbunden, so daß er beim Verfahren desselben mit bewegt wird. Bei dieser Maschine wird also die Bautiefe in Y-Richtung durch eine Anordnung des Motors quer zu der Y-Richtung reduziert, was allerdings ein kompliziertes Getriebe erfordert.

Ferner ist es aus der FR-A-2 535 426 ebenfalls bekannt, bei einer Bewegungseinheit den Antriebsmotor an dem Schlitten anzubringen, so daß er sich beim Verfahren des Schlittens mit bewegt.

Der Erfindung liegt daher die Aufgabe zugrunde, eine Werkzeugmaschine der eingangs genannten Art dahingehend weiterzubilden, daß die Bautiefe der Werkzeugmaschine vermindert und gleichzeitig die Zugänglichkeit der Antriebselemente des y-Antriebes verbessert wird.

Diese Aufgabe wird erfindungsgemäß dadurch gelöst, daß der Antriebsmotor mit seinem Stator starr mit der Bewegungseinheit verbunden und im wesentlichen axial zwischen den Führungselementen angeordnet ist.

Die der Erfindung zugrundeliegende Aufgabe wird auf diese Weise vollkommen gelöst, weil die Integration des y-Antriebsmotors in den y-Schlitten zum einen zu einer drastischen Verminderung der Bautiefe der Bewegungseinheit und damit auf der gesamten Werkzeugmaschine führt, während außerdem die Antriebselemente des y-Antriebs nunmehr von der Vorderseite des y-Schlittens her zugänglich werden und damit ein umständliches Arbeiten im Zwischenraum zwischen Schaltschrank und y-Schlitten nicht mehr erforderlich ist.

In der Praxis führt dies zu einer Reduzierung der Bautiefe der Werkzeugmaschine von etwa einem halben Meter und die Wechselzeit für einen y-Antrieb vermindert sich auf einen Bruchteil der nach dem Stand der Tecknik erforderlichen Zeit.

Bei einer bevorzugten Ausgestaltung der Erfindung sind die Führungsschienen starr mit einer Gewindehülse verbunden und der Antriebsmotor treibt eine in der Gewindehülse laufende Gewindespindel an.

Diese Maßnahme hat den Vorteil, daß eine präzise und optimal lagerbare Vorschubeinrichtung für die Werkzeugmaschine zur Verfügung steht.

Bei einer bevorzugten Ausgestaltung der Erfindung trägt die Gewindespindel ein Zahnrad, die Achsen der Gewindespindel, des Zahnrades und des Antriebsmotors verlaufen parallel und das Zahnrad wird von einem weiteren Zahnrad des Antriebsmotors vorzugsweise unter Kopplung über einen Zahnriemen angetrieben.

Diese Maßnahme ermöglicht eine besonders platzsparende Bauweise, weil der Antriebsmotor mit seiner Längsachse unmittelbar neben der parallel ausgerichteten Gewindespindel angeordnet werden kann und es ergibt sich ferner der Vorteil, daß durch Einstellung einer Übersetzung zwischen den Zahnrädern z.B. eine Untersetzung der Antriebsmotordrehzahl für eine besonders langsame und feinfühlige Vorschubbewegung in y-Richtung möglich ist.

Bei einer besonders bevorzugten Ausgestaltung der Erfindung ist die Bewegungseinheit an einer Vorderseite mit zwei senkrechten Führungsschienen zum vertikalen Verfahren eines Spindelstocks versehen, wie dies an sich bekannt ist und der demontierbare Antriebsmotor ist zwischen den vertikalen Führungsschienen nach vorne aus der Bewegungseinheit entnehmbar.

Diese Maßnahme hat den wesentlichen Vorteil, daß die zum Austausch des y-Antriebes erforderliche Montagezeit auf einen Bruchteil der nach dem Stand der Technik erforderlichen Arbeitszeit reduziert wird, weil lediglich einige Schrauben gelöst werden müssen, um dann den Antriebsmotor, ggf. auch den kompletten Antrieb nach vorne zwischen den senkrechten Führungsschienen aus der Vorderseite der Bewegungseinheit zu entnehmen.

Besonders bevorzugt ist bei diesem Ausführungsbeispiel, wenn die Zahnräder und der Zahnriemen zwischen den vertikalen Führungsschienen angeordnet sind und mit ihren Stirnseiten im wesentlichen mit Vorderseiten der vertikalen Führungsschienen fluchten.

Diese Maßnahme hat den Vorteil, daß die Bautiefe der Werkzeugmaschine vollkommen ausgenutzt wird, weil der zwischen den vertikalen Führungsschienen ohnehin vorhandene Zwischenraum nunmehr für das durch die Zahnräder und den Zahnriemen gebildete Getriebe genutzt wird, ohne daß hierfür eine zusätzliche Bautiefe erforderlich ist.

Weitere Vorteile ergeben sich aus der Beschreibung und der beigefügten Zeichnung.

Ausführungsbeispiele der Erfindung sind in der Zeichnung dargestellt und werden in der nachfolgenden Beschreibung näher erläutert. Es zeigen:
- Fig. 1: eine schematisierte Seitenansicht einer Werkzeugmaschine nach dem Stand der Technik;
- Fig. 2: eine Ansicht ähnlich Fig. 1, jedoch für eine Werkzeugmaschine nach der Erfindung;
- Fig. 3: eine perspektivische Teilansicht von vorne der Werkzeugmaschine gemäß Fig. 2.

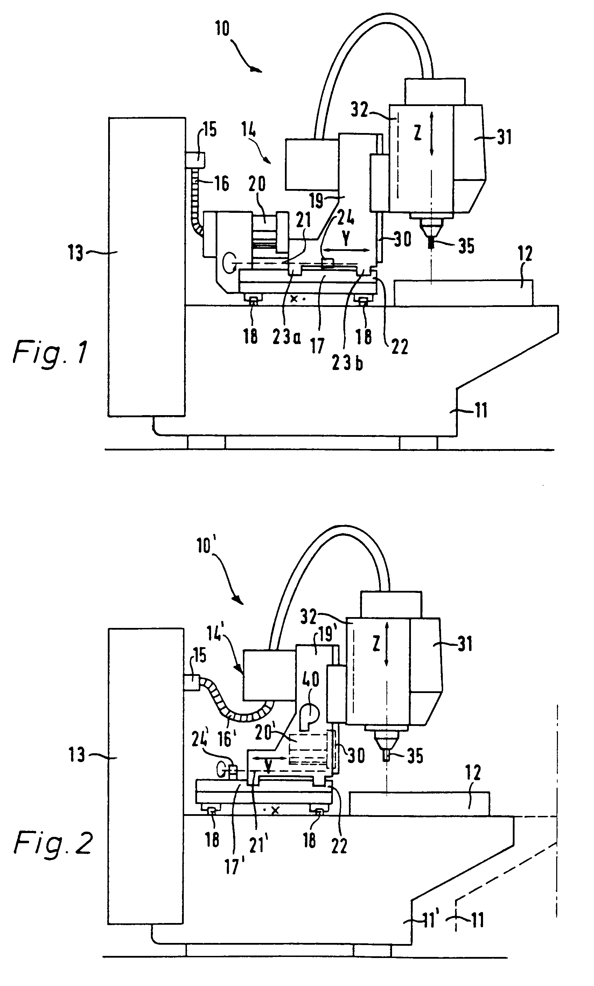

In Fig. 1 bezeichnet 10 insgesamt eine Werkzeugmaschine, die als Bearbeitungszentrum im wesentlichen zum Bohren und Fräsen von Werkstücken eingesetzt wird. Die Werkzeugmaschine 10 weist eine Maschinenbett 11 auf, das eine in eine Horizontalebene angeordneten Werkstücktisch 12 trägt. Der Werkstücktisch 12 kann in einer Richtung senkrecht zur Zeichenebene der Fig. 1 mehrere Meter lang sein.

Auf der Rückseite der Werkzeugmaschine 10 ist ein Schaltschrank 13 angeordnet, der etwa mannshoch ist und sich einen bis drei Meter parallel zum Werkstücktisch 12 erstreckt.

Im Zwischenraum zwischen Werkstücktisch 12 und Schaltschrank 13 ist auf dem Maschinenbett 11 eine insgesamt mit 14 bezeichnete bewegliche Einheit angeordnet, die zur Erzeugung von Bewegungen in Richtung von drei kartesischen Koordinaten dient.

Über einen Anschluß 15 und eine flexible Leitung 16 wird die bewegliche Einheit 14 mit elektrischer Energie, Druckluft, elektrischen Steuersignalen u. dgl. versorgt.

Eine x-Bewegungseinheit 17 ist auf Rollen 18 auf dem Maschinenbett 11 in einer Richtung senkrecht zur Zeichenebene der Fig. 1 verfahrbar. Die Antriebselemente hierfür sind der Übersichtlichkeit halber nicht im einzelnen dargestellt.

Eine y-Bewegungseinheit 19 ist auf der x-Bewegungseinheit 17 angeordnet und wird von einem auf der x-Bewegungseinheit 17 starr befestigten y-Antriebsmotor 20 mittels einer rotierenden y-Spindel 21, beispielsweise einer Kugelgewindespindel, angetrieben. Hierzu läuft die y-Bewegungseinheit 19 auf y-Führungsschienen 22, die starr auf der Oberseite der x-Bewegungseinheit 17 in einer Richtung rechtwinklig zur x-Achse befestigt sind. Die y-Bewegungseinheit 19 ist zu diesem Zwecke mit Führungselementen 23 versehen, beispielsweise Rollen oder Kufen, die formschlüssig auf den Y-Führungsschienen 22 laufen. Die y-Bewegungseinheit 19 weist ferner eine mit dieser starr verbundene Gewindehülse 24 auf, die auf der y-Spindel 21 läuft. Wenn der y-Antriebsmotor 20 umläuft und die y-Spindel 21 in Rotation versetzt, hat dies eine Bewegung der y-Bewegungseinheit 19 in Richtung der y-Achse zur Folge.

An der vorderen Stirnseite der y-Bewegungseinheit 19, d.h. auf der dem Werkstücktisch 12 zu weisenden Seite ist die y-Bewegungseinheit 19 mit zwei vertikalen z-Führungsschienen 30 versehen, auf denen ein Spindelstock 31 in vertikaler Richtung mittels einer z-Spindel 32 verfahrbar ist.

Der Spindelstock 31 enthält Antriebselemente für eine Spindel, in die ein Werkzeug 35 einspannbar ist.

Mit den vorstehend erläuterten Bewegungseinheiten 17, 19 und 31 ist es möglich, das Werkzeug 35 in Richtung von drei kartesischen Koordinaten x, y und z zu verfahren und auf diese Weise Bearbeitungsaufgaben an einem Werkstück auszuführen, das auf den Werkstücktisch 12 aufgespannt ist.

Wie man aus Fig. 1 erkennt, nimmt der y-Antriebsmotor 20 im Zwischenraum zwischen Schaltschrank 13 und y-Bewegungseinheit 19 einen erheblichen Raum ein. Die Werkzeugmaschine 10 weist daher in Richtung der y-Achse eine erhebliche Bautiefe auf. Außerdem ist es ersichtlich umständlich, am y-Antriebsmotor 20 zu arbeiten, insbesondere diesen oder die y-Spindel 21 zu demontieren, weil in Richtung der y-Achse zwischen Schaltschrank 13 und y-Bewegungseinheit 19 nur sehr wenig Spielraum zur Verfügung steht.

Die erfindungsgemäße Werkzeugmaschine 10' gemäß Fig. 2 unterscheidet sich von der Werkzeugmaschine 10 gemäß Fig. 1, die den Stand der Technik wiedergibt, dadurch, daß der y-Antriebsmotor 20' in die y-Bewegungseinheit 19' integriert ist. Der y-Antriebsmotor 19' ist mit seinem Stator nunmehr starr mit der y-Bewegungseinheit 19 verbunden und erstreckt sich im Bereich zwischen den Führungselementen 23, wobei diese Anordnung nicht symmetrisch sein muß und der Antriebsmsotor 20' auch geringfügig zu einer oder beiden Seiten der Führungselemente 23 vorstehen kann.

Die flexible Leitung 16' ist bei der erfindungsgemäßen Maschine an die y-Bewegungseinheit 19' angeschlossen, so daß die x-Bewegungseinheit 17' anschlußfrei ist.

Die Gewindehülse 24' ist bei der erfindungsgemäßen Werkzeugmaschine 10' starr mit der x-Bewegungseinheit 17 verbunden. Der y-Antriebsmotor 20' treibt wiederum die Y-Spindel 21 an, die nunmehr axial starr mit der y-Bewegungseinheit 19 verbunden ist. Bei Rotation der y-Spindel 21 vollführt die y-Bewegungseinheit 19 daher eine Bewegung in y-Richtung.

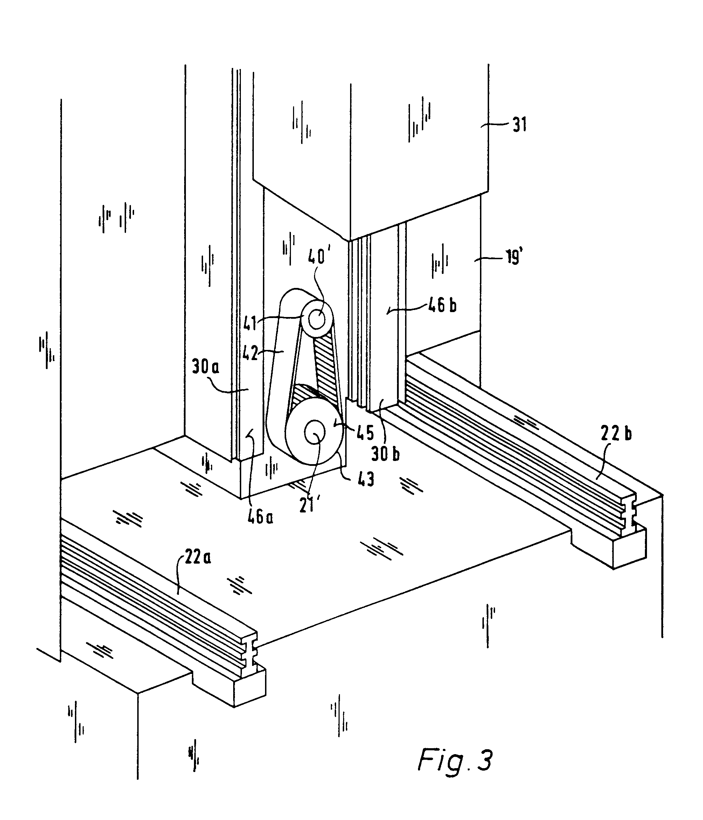

Wie man aus Fig. 2, besonders deutlich aber aus Fig. 3 erkennen kann, ist eine weitere Einsparung an Bauraum dadurch möglich, daß Teile des y-Antriebes in den ansonsten freien Zwischenraum zwischen den vertikalen z-Führungsschienen 30a und 30b verlegt wird.

Zum direkten Kühlen des eingebauten y-Antriebsmotors 20' ist ein Gebläse 40 in der y-Bewegungseinheit 19' angeordnet.

In Fig. 3 erkennt man eine Welle 40' des Y-Antriebsmotors 20', die ein erstes Zahnrad 41 antreibt. Ein über das erste Zahnrad 41 gelegter Zahnriemen 42 treibt ein zweites Zahnrad 43 an, das auf der y-Spindel 21' sitzt. Auf diese Weise wird eine raumsparende Bauart mit übereinander parallel angeordnetem y-Antriebsmotor 20' und y-Spindel 21' erreicht, außerdem kann durch Dimensionierung der Zahnräder 41 und 43 das Übersetzungsverhältnis eingestellt und eine relativ schnelle Antriebsdrehzahl des y-Antriebsmotors 20' in eine entsprechend verminderte Drehzahl der y-Spindel 21' umgesetzt werden.

Die Anordnung ist dabei vorzugsweise so getroffen, daß die Stirnseiten 45 der Zahnräder 41, 43 mit Vorderseiten 46 der vertikalen z-Führungsschienen 30a und 30b im wesentlichen fluchten. Die Bewegungsbahn des Spindelstocks 31 wird damit nicht behindert.

Da die in Fig. 3 erkennbare Vorderseite der y-Bewegungseinheit 19' frei zugänglich ist, können die y-Antriebselemente, d.h. der y-Antriebsmotor 20' und die y-Spindel 21' leicht nach vorne aus der y-Bewegungseinheit 19' entnommen werden.

## Patentansprüche

1. Werkzeugmaschine mit einer entlang einer horizontal verlaufenden Achse (y) relativ zu einem Werkstücktisch (12) verfahrbaren Bewegungseinheit (19), mit in Richtung der Achse (y) verlaufenden und in dieser Richtung unbeweglichen Führungsschienen (22a, 22b), auf denen axial versetzte Führungselemente (23a, 23b) der Bewegungseinheit (19) laufen, und mit einem Antriebsmotor (20, 20') zum Erzeugen einer Relativbewegung zwischen Bewegungseinheit (19) und Führungsschienen (22a, 22b), wobei die Motorwelle (40') parallel zu den Führungsschienen (22a, 22b) verläuft, dadurch gekennzeichnet, daß der Antriebsmotor (20') mit seinem Stator starr mit der Bewegungseinheit (19) verbunden und im wesentlichen axial zwischen den Führungselementen (23a, 23b) angeordnet ist.

2. Werkzeugmaschine nach Anspruch 1, dadurch gekennzeichnet, daß die Führungsschienen (22a, 22b) starr mit einer Gewindehülse (24') verbunden sind und daß der Antriebsmotor (20) eine in der Gewindehülse (24') laufende Gewindespindel (21) antreibt.

3. Werkzeugmaschine nach Anspruch 2, dadurch gekennzeichnet, daß die Gewindespindel (21) ein Zahnrad (43) trägt, daß die Achsen der Gewindespindel (21), des Zahnrades (43) und des Antriebsmotors (20) parallel verlaufen und daß das Zahnrad (43) von einem weiteren Zahnrad (41) des Antriebsmotors (20) angetrieben wird.

4. Werkzeugmaschine nach Anspruch 3, dadurch gekennzeichnet, daß die Zahnräder (41, 43) über einen Zahnriemen (42) miteinander gekoppelt sind.

5. Werkzeugmaschine nach einem der Ansprüche 1 bis 4, dadurch gekennzeichnet, daß die Bewegungseinheit (19) an einer Vorderseite mit zwei senkrechten Führungsschienen (30a, 30b) zum vertikalen Verfahren eines Spindelstocks (31) versehen ist, und daß der demontierbare Antriebsmotor (20) zwischen den vertikalen Führungsschienen (30a, 30b) nach vorne aus der Bewegungseinheit (19) entnehmbar ist.

6. Werkzeugmaschine nach Anspruch 4 und 5, dadurch gekennzeichnet, daß die Zahnräder (41, 43) und der Zahnriemen (42) zwischen den vertikalen Führungsschienen (30a, 30b) angeordnet sind und mit ihren Stirnseiten (45) im wesentlichen mit Vorderseiten (46a, 46b) der vertikalen Führungsschienen (30a, 30b) fluchten.

## Claims

1. Machine tool comprising a motion unit (19) that can be displaced relative to a work table (12) along a horizontal axis (y), guide rails (22a,22b) extending in the direction of the axis (y), being fixed against movement in this direction and supporting guide elements (23a,23b) of the motion unit (19) running thereon, and a drive motor (20,20') for effecting a relative movement between said motion unit (19) and said guide rails (22a,22b), wherein the motor shaft (40') extends parallel to said guide rails (22a,22b), characterized in that said drive motor (20') has its stator rigidly connected to said motion unit (19) and is arranged in substantially axial orientation between said guide elements (23a,23b).

2. Machine tool according to claim 1, characterized in that said guide rails (22a,22b) are connected rigidly with a threaded sleeve (24') and said drive motor (20) drives a threaded spindle (21) running in said threaded sleeve (24').

3. Machine tool according to claim 2, characterized in that said threaded spindle (21) carries a toothed gear (43), the axes of said threaded spindle (21), said gear (43) and said drive motor (20) extend parallel to each other and said gear (43) is driven by another toothed gear (41) of said drive motor (20).

4. Machine tool according to claim 3, characterized in that said toothed gears (41,43) are coupled by means of a toothed belt (42).

5. Machine tool according to any of claims 1 to 4, characterized in that one front face of said motion unit (19) is provided with two vertical guide rails (30a,30b) for vertical displacement of a spindle stock (31), and the detachable drive motor (20) can be removed from said motion unit (19) between said vertical guide rails (30a,30b) in forward direction.

6. Machine tool according to claims 4 and 5, characterized in that said toothed gears (41,43) and said toothed belt (42) are arranged between said vertical guide rails (30a,30b) and their end faces (45) are substantially aligned with front faces (46a,46b) of said vertical guide rails (30a,30b).

## Revendications

1. Machine-outil avec une unité mobile (19) pouvant être déplacée en translation le long d'un axe (y) horizontal par rapport à une table porte-pièce (12), avec des rails de guidage (22a, 22b) orientés dans la direction de l'axe (y) et fixes dans cette direction, sur lesquels se déplacent des éléments de guidage (23a, 23b) de l'unité mobile (19) décalés axialement, et avec un moteur d'entraînement (20, 20') pour générer un mouvement relatif entre l'unité mobile (19) et les rails de guidage (22a, 22b), l'arbre du moteur (40') étant parallèle aux rails de guidage (22a, 22b), caractérisée en ce que le moteur d'entraînement (20'), avec son stator, est monté de manière fixe sur l'unité mobile (19) et est placé essentiellement dans le sens axial entre les éléments de guidage (23a, 23b).

2. Machine-outil selon la revendication 1, caractérisée en ce que les rails de guidage (22a, 22b) sont reliés de manière fixe à une douille taraudée (24') et en ce que le moteur d'entraînement (20) entraîne une broche filetée (21) tournante dans la douille taraudée (24').

3. Machine-outil selon la revendication 1, caractérisée en ce que la broche filetée (21) porte une roue dentée (43), en ce que les axes de la broche filetée (21), de la roue dentée (43) et du moteur d'entraînement (20) sont orientés parallèlement et en ce que la roue dentée (43) est entraînée par une autre roue dentée (41) du moteur d'entraînement (20).

4. Machine-outil selon la revendication 3, caractérisée en ce que les roues dentées (41, 43) sont couplées l'une avec l'autre au moyen d'une courroie crantée (42).

5. Machine-outil selon l'une des revendications 1 à 4, caractérisée en ce que l'unité mobile (19) est pourvue, sur une face avant, de deux rails de guidage (30a, 30b) verticaux, pour la translation verticale d'une poupée porte-broche (31), et en ce que le moteur d'entraînement (20) démontable entre les rails de guidage verticaux (30a, 30b) peut être retiré de l'unité mobile (19) par l'avant.

6. Machine-outil selon les revendications 4 et 5, caractérisée en ce que les roues dentées (41, 43) et la courroie crantée (42) sont placées entre les rails de guidage (30a, 30b) et se trouvent avec leurs faces frontales (45) essentiellement alignées avec les faces avant (46a, 46b) des rails de guidage verticaux (30a, 30b).
